# EUROPÄISCHE PATENTSCHRIFT

(11) **EP 3 047 529 B1**
(45) Veröffentlichungstag und Bekanntmachung des Hinweises auf die Patenterteilung: **13.05.2020**
(21) Anmeldenummer: 14761342.6
(22) Anmeldetag: 05.09.2014
(51) Int. Cl.: H01M 2/00, H01M 2/02

(54) **VORRICHTUNG UND VERFAHREN ZUR ENTFEUCHTUNG EINES BATTERIEGEHÄUSES.**
DEVICE AND PROCESS FOR WATER REMOVAL FROM A BATTERY CONTAINER.
PROCEDE ET APPAREILLAGE POUR L'ELIMINATION D'EAU D'UN BOÎTIER DE BATTERIE

(30) Priorität: 18.09.2013 DE 102013218700
(43) Veröffentlichungstag der Anmeldung: 27.07.2016
(73) Patentinhaber: Robert Bosch GmbH, 70442 Stuttgart (DE)
(72) Erfinder: BOSCH, Andreas, 71739 Oberriexingen (DE)
(86) Internationale Anmeldenummer: PCT/EP2014/068900
(87) Internationale Veröffentlichungsnummer: WO 2015/039885

(56) Entgegenhaltungen:
- US-A1- 2004 074 768
- US-B2- 6 936 375
- US-B2- 7 799 453
- SHULING ZENG ET AL.: "FABRICATION AND CHARACTRIZATION OF ELECTROOSMOTIC MICROPUMPS", SENSORS AND ACTUATORS, Bd. 79, 10. Mai 2001 (2001-05-10), Seiten 107-114, XP002731816,

## Beschreibung

### Gebiet der Erfindung

Die Erfindung betrifft eine Vorrichtung und ein Verfahren zur Entfeuchtung eines Batteriegehäuses sowie ein Batteriegehäuse, eine Batterietrennvorrichtung und ein Batteriesystem. Die Erfindung betrifft weiterhin ein Fahrzeug, insbesondere ein Kraftfahrzeug wie Elektrokraftfahrzeug oder Hybridfahrzeug, mit dem Batteriesystem.

### Stand der Technik

Es ist absehbar, dass sowohl bei stationären Anwendungen, zum Beispiel bei Windkraftanlagen, als auch bei mobilen Anwendungen, zum Beispiel bei Elektrokraftfahrzeugen (electric vehicles, EV) oder Hybridfahrzeugen (hybrid electric vehicles, HEV), als wiederaufladbare Energiespeicher vermehrt neue Batteriesysteme, zum Beispiel mit Lithium-Ionen-Akkumulatoren oder Nickel-Metallhybrid-Akkumulatoren, zum Einsatz kommen werden.

Die Batteriesysteme müssen sehr hohe Anforderungen bezüglich des nutzbaren Energieinhalts, des Lade-/ Entlade-Wirkungsgrads, der Zuverlässigkeit, der Lebensdauer und des unerwünschten Kapazitätsverlusts durch häufige Teilentladung (Memory Effekt) erfüllen.

Ein Batteriesystem umfasst eine Vielzahl von Batteriezellen. Aufgrund ihres Zelleninnenwiderstands und der stattfindenden elektrochemischen Prozesse erwärmen sich die Batteriezellen während des Ladens und Entladens. Die Batteriezellen können in Reihe (Serie) verschaltet werden, um die elektrische Spannung zu erhöhen, und/oder parallel verschaltet werden, um den maximalen elektrischen Strom zu erhöhen. Dabei konnen die Batteriezellen zu Batterieeinheiten bzw. Batteriemodulen zusammengefasst werden. Beim Einsatz zum Antrieb von Fahrzeugen können beispielsweise ca. 100 Batteriezellen (als eine Traktionsbatterie) in Serie bzw. parallel verschaltet werden. Bei einem Hochvoltbatteriesystem kann die Gesamtspannung somit beispielsweise 450 V oder sogar 600 V betragen.

Der für den Betrieb der Batteriezellen zulässige Temperaturbereich liegt typischer Weise zwischen -30 °C und +70 °C. Im unteren Bereich der Betriebstemperatur kann die Leistungsfähigkeit der Batteriezellen deutlich abnehmen. Dabei kann auch eine irreversible Schädigung der Batteriezellen auftreten. Auch wenn die Betriebstemperatur überschritten wird, kann die Leistungsfähigkeit der Batteriezellen deutlich abnehmen. Dabei kann ebenfalls eine irreversible Schädigung der Batteriezellen auftreten. Die Schädigung kann zu einer beschleunigten Alterung der Batteriezellen oder einem thermischen Durchgehen (Thermal Runaway) der Batteriezellen, das eine Gefahr für Mensch und Umwelt darstellt, führen.

Um die Sicherheit und Funktion des Batteriesystems zu gewährleisten, ist es daher erforderlich, die Batteriezellen innerhalb des vorgegebenen Temperaturbereichs zu betreiben. Einerseits entsteht während des Betriebs der Batteriezellen Wärme, die abgeführt werden muss, um ein Aufheizen der Batteriezellen über die kritische Maximaltemperatur zu vermeiden. Anderseits kann es erforderlich sein, die Batteriezellen bei tiefen Temperaturen auf eine Mindesttemperatur aufzuheizen. Zur Einhaltung des vorgegebenen Temperaturbereichs wird das Batteriesystem temperiert, d. h. bedarfsgerecht gekühlt bzw. geheizt.

Dazu kann das Batteriesystem ein Fluid, zum Beispiel eine Flüssigkeit wie Alkohol beispielsweise Propan-1,2,3-triol (Glycerol, Glycerin), Öl oder Wasser oder ein Flüssigkeitsgemisch, als Temperiermittel in einem Temperiermittelkreislauf umfassen.

Wenn ein Gehäuse des Batteriesystems nicht hermetisch verschlossen (gasdicht) ist, kann, zum Beispiel durch Dichtungen, ständig Feuchtigkeit, zum Beispiel in Form von Wasserdampf, in das Batteriesystem eindringen. Da beim Kühlen des Batteriesystems die Temperiermitteltemperatur deutlich unter der Temperatur in dem Gehäuse liegt, kann sich Tauwasser (Kondenswasser, Schwitzwasser) bilden. Somit kann sich in dem Batteriesystem Wasser in flüssiger Form, entweder rein oder als Flüssigkeitsgemisch, bilden und/oder ansammeln. Flüssiges Wasser, zum Beispiel Regentropfen, Nebeltröpfchen und festes Wasser, zum Beispiel Eis und Schneekristalle werden der Luftfeuchtigkeit nicht zugerechnet.

Batteriezellen können zu Batteriemodulen oder Batteriepacks zusammengefasst sein. Bei einem Batteriepack können die Batteriezellen in einer metallischen Rahmenstruktur, die in einer Umhüllung aus einer flexiblen, wasserdichten Kunststofffolie angeordnet sein, angeordnet sein. Dabei ist die Gefahr der Bildung und Ansammlung von Kondenswasser (Kondensation) erhöht.

Um die Sicherheit des Batteriesystems, insbesondere des Hochvoltbatteriesystems, zu gewährleisten, kann es weiterhin erforderlich sein, den Stromkreis beispielsweise mittels einer Schalteinrichtung wie eines Relais, eines Schützes insbesondere eines Schaltschützes oder eines Schalters unterbrechen zu können. Die Schalteinrichtung muss hohe Ströme beispielsweise mehrere 100 A übertragen und auch sicher trennen können. Kurzschlussströme können beispielsweise mit einer Überstromschutzeinrichtung wie einer Sicherung insbesondere Schmelzsicherung abgesichert sein. Die Schalteinrichtung, die Überstromschutzeinrichtung und / oder eine Sensoreinrichtung können beispielsweise in dem Batteriesystem oder einer Batterietrennvorrichtung (battery disconnect unit, BDU) angeordnet sein.

Somit besteht aufgrund von Temperaturunterschieden und / oder Temperaturänderungen eine Gefahr der Bildung von Kondenswasser in dem Batteriesystem oder der Batterietrennvorrichtung. Aufgrund des Kondenswassers bestehen eine Gefahr der Beschädigung und / oder des Ausfalls von den elektrischen und / oder elektronischen Komponenten, zum Beispiel den Batteriezellen, der Schalteinrichtung, der Überstromschutzeinrichtung und / oder der Sensoreinrichtung durch Korrosion und / oder eine Gefährdung der Sicherheit. Aufgrund einer nicht mehr sachgerechten Funktionsweise des Batteriesystems und / oder der Batterietrennvorrichtung kann somit beispielsweise bei einem unfallbedingten Aufprall ein hohes Sicherheitsrisiko bestehen. In einem Extremfall beispielsweise bei einem Kurzschluss könnten die Batteriezellen explodieren.

Um die Sicherheit und Funktion eines Batteriesystemen, zum Beispiel Lithium-Ionen-Batteriesystems, zu gewährleisten, ist es somit erforderlich, die Bildung von Kondenswasser zu verhindern bzw. das gebildete Kondenswasser aus dem Batteriesystem zu entfernen. US7799453 B2 beschreibt ein System zur Förderung von Wasser aus einer bzw. in eime Brermstoffzelle, die durch eine elektroosmotische Pumpe durchgeführt wird.

### Offenbarung der Erfindung

Die wesentlichen Merkmale der Erfindung sind in Wortlaut der unabhängigen Anspruche 1, 4, 5 und 6 beschrieben. Andere optionale Merkmale der Erfindung sind in Wortlaut der abhängigen Ansprüche 2 und 3 erwähnt.

Die erfindungsgemäßen Vorrichtungen und Verfahren mit den Merkmalen der unabhängigen Ansprüche haben den Vorteil, dass Wasser wie Kondenswasser aus einem Batteriegehäuse, wie einem Metallgehäuse beispielsweise aus Aluminium oder Stahl wie rostfreiem Stahl, bzw. einem Batteriesystem oder einer Batterietrennvorrichtung entfernt werden kann. Dadurch kann Korrosion an den elektrischen und / oder elektronischen Komponenten des Batteriesystems oder der Batterietrennvorrichtung beispielsweise an Kontakten der Komponenten verhindert werden. Weiterhin können die Anforderungen an die Komponenten beispielsweise bezüglich Korrosionsschutz und / oder Korrosionsbeständigkeit und / oder elektrischer Isolation reduziert werden. Somit können die Kosten beispielsweise Herstellungskosten und Instandsetzungskosten reduziert und Ressourcen geschont werden. Weiterhin kann die sachgerechte Funktionsweise des Batteriesystems oder der Batterietrennvorrichtung gewährleistet werden und die Zuverlässigkeit des Batteriesystems oder der Batterietrennvorrichtung erhöht werden.

Zweckmäßiger Weise umfasst die Vorrichtung weiterhin eine Verschliesseinrichtung zum Verschließen des Körpers, insbesondere eine Verschließeinrichtung umfassend eine Abdeckung mit einer Rasteinrichtung und Rastfedern zum Einrasten in der Rasteinrichtung und Verriegeln der Abdeckung. Dadurch kann eine unkontrollierte Ableitung von Schadgasen verhindert werden.

Zweckmäßiger Weise kann die Vorrichtung weiterhin eine Abflusseinrichtung insbesondere Unterdruckabflusseinrichtung zum Abführen des entfernten Wassers umfassen. Dadurch können die Funktionsweise vereinfacht und die Kosten wie Herstellungskosten und Wartungskosten reduziert werden.

Zweckmäßiger Weise kann die Vorrichtung weiterhin eine Trockenmitteleinrichtung insbesondere beheizbare Trockenmitteleinrichtung zur Aufnahme des entfernten Wassers umfassen. Dadurch können die Funktionsweise vereinfacht und die Kosten wie Wartungskosten reduziert werden.

Die Erfindung stellt ein Batteriegehäuse bereit, das die zuvor beschriebene Vorrichtung umfasst. Die Erfindung stellt eine Batterietrennvorrichtung bereit, die die zuvor beschriebene Vorrichtung umfasst. Die Erfindung stellt ein Batteriesystem bereit, das die zuvor beschriebene Vorrichtung, das zuvor beschriebene Batteriegehäuse oder die zuvor beschriebene Batterietrennvorrichtung umfasst.

Die Erfindung stellt weiterhin ein Fahrzeug, insbesondere Kraftfahrzeug wie Elektrokraftfahrzeug, Hybridfahrzeug oder Elektromotorrad (Elektro-Bike, E-Bike), Elektrofahrrad (Pedelec), ein Seefahrzeug wie Elektroboot, ein Luftfahrzeug oder ein Raumfahrzeug, bereit, das die zuvor beschriebene und mit dem Fahrzeug verbundene Vorrichtung, das zuvor beschriebene und mit dem Fahrzeug verbundene Batteriegehäuse, die zuvor beschriebene und mit dem Fahrzeug verbundene Batterietrennvorrichtung oder das zuvor beschriebene und mit dem Fahrzeug verbundene Batteriesystem umfasst.

Die Beschreibungstellt weiterhin ein Computerprogramm bereit, das alle Schritte des zuvor beschriebenen Verfahrens ausführt, wenn es auf einem Rechengerät abläuft. Die Beschreibungstellt weiterhin ein Computerprogrammprodukt mit Programmcode, der auf einem maschinenlesbaren Träger gespeichert ist, zur Durchführung des zuvor beschriebenen Verfahrens bereit, wenn der Programmcode auf einem Computer oder Steuergerät ausgeführt wird.

### Kurze Beschreibung der Zeichnungen

Ausführungsbeispiele der Erfindung sind in den Zeichnungen dargestellt und in der nachfolgenden Beschreibung näher erläutert.

Es zeigen:
Figur 1 eine schematische Seitenansicht eines Batteriesystems 10 mit einer Vorrichtung 300 gemäß einer Ausführungsform der Erfindung,
Figur 2 eine schematische Draufsicht des Batteriesystems 10 mit der Vorrichtung 300 gemäß der Ausführungsform der Erfindung,
Figur 3 eine schematische Seitenansicht eines Batteriesystems 20 mit einer anderen Vorrichtung 300 gemäß der Ausführungsform der Erfindung in einer geöffneten Stellung,
Figur 4 eine schematische Seitenansicht des Batteriesystems 20 mit der anderen Vorrichtung 300 gemäß der Ausführungsform der Erfindung in einer geschlossenen Stellung,
Figur 5 eine schematische Seitenansicht eines Batteriesystems 30 mit einer Vorrichtung 300 gemäß einer anderen Ausführungsform der Erfindung,
Figur 6 eine schematische Seitenansicht eines in einem Fahrzeug angeordneten Batteriesystems 40 mit der Vorrichtung 300 gemäß der anderen Ausführungsform der Erfindung,
Figur 7 eine schematische Seitenansicht eines Batteriesystems 50 mit einer anderen Vorrichtung 300 gemäß der anderen Ausführungsform der Erfindung, und
Figur 8 eine schematische Seitenansicht eines Batteriesystems 60 mit einer Vorrichtung 300 gemäß einer weiteren Ausführungsform der Erfindung.

### Ausführungsformen der Erfindung

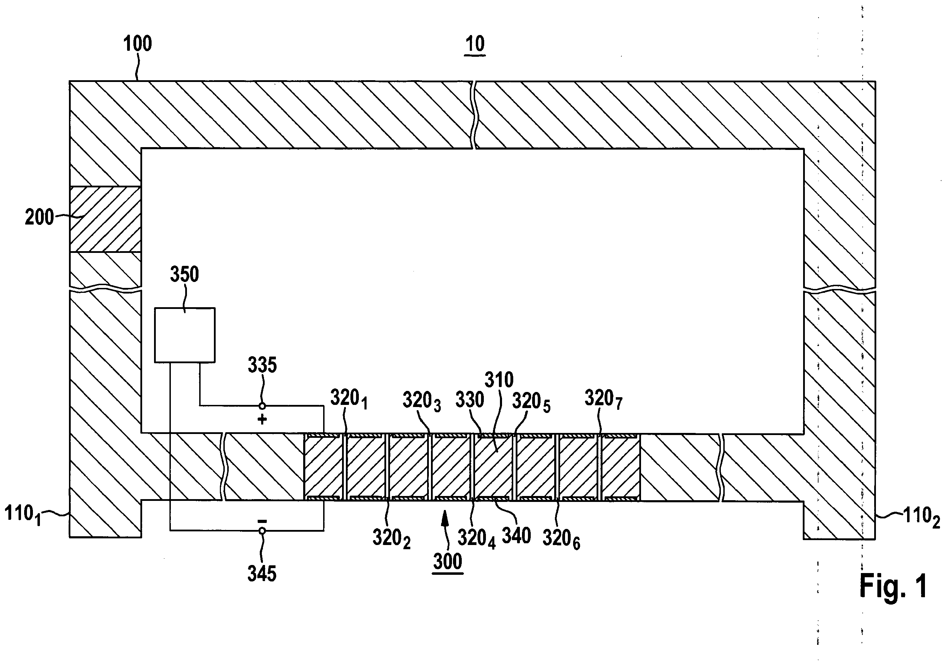

Figur 1 zeigt eine schematische Seitenansicht eines Batteriesystems 10 mit einer Vorrichtung 300 gemäß einer Ausführungsform der Erfindung.

Das Batteriesystem 10 bzw. die Batterietrennvorrichtung umfasst ein Gehäuse 100 beispielsweise Batteriegehäuse und elektrische und / oder elektronische Einrichtungen (Komponenten) beispielsweise Batteriezellen, eine Schalteinrichtung wie ein Relais, einen Schalter, einen Schütz oder einen Schaltschütz, eine Überstromschutzeinrichtung wie Sicherungseinrichtung und / oder eine Sensoreinrichtung wie Stromsensoreinrichtung.
Die Komponenten sind in einem Innenraum des Gehäuses 100 angeordnet. Das Gehäuse 100 kann Befestigungsbereiche beispielsweise Sockelbereiche 110₁, 110₂ auf einer Unterseite des Gehäuses 100 umfassen.

Das Batteriesystem 10 bzw. die Batterietrennvorrichtung kann weiterhin eine Temperiereinrichtung wie Kühleinrichtung zur Temperierung der Komponenten umfassen.

Das Gehäuse 100 kann hermetisch dicht wie flüssigkeitsdicht oder wasserdicht und / oder gasdicht ausgelegt sein. Alternative kann das Batteriesystem 10 bzw. die Batterietrennvorrichtung weiterhin ein Druckausgleichselement (DAE) 200, das in einer Wand beispielsweise Seitenwand des Gehäuses 100 angeordnet ist, zur Belüftung und / oder Entlüftung des Batteriesystems 10 bzw. die Batterietrennvorrichtung umfassen. Das Druckausgleichselement 200 ist luftdurchlässig, aber staubundurchlässig. Somit kann Umgebungsluft, die stets eine temperaturabhängige und druckabhängige Menge an Wasser umfasst, durch das Druckausgleichselement 200 in den Innenraum gelangen.

Bei Temperaturunterschieden und / oder Temperaturänderungen kann Luftfeuchtigkeit, die sich im Innenraum befindet, beispielsweise an der Kühleinrichtung kondensieren und/oder bei Druckänderungen wie Luftdruckänderungen kann Feuchtigkeit in das Gehäuse 100 eindringen.

Das Batteriesystem 10 bzw. die Batterietrennvorrichtung umfasst weiterhin eine Vorrichtung 300, 350 zur Entfeuchtung des Gehäuses 100. Die Vorrichtung 300, 350 zur Entfeuchtung des Gehäuses 100 umfasst eine Entfeuchtungseinrichtung 300 zur Entfernung des Wassers (Entfeuchtung) und eine Steuerungseinrichtung 350 zur Steuerung der Entfeuchtungseinrichtung 300.

Die Entfeuchtungseinrichtung 300 umfasst einen Körper 310, der beispielsweise als Scheibe wie Rundscheibe oder Platte wie rechteckige oder quadratische Platte ausgebildet sein kann. Die Entfeuchtungseinrichtung 300 kann, wie in Figur 1 beispielhaft gezeigt, in einem Boden des Gehäuses 100 (Gehäuseboden) angeordnet sein. Alternativ kann die Entfeuchtungseinrichtung 300 in einer Wand wie Seitenwand oder in einem Deckel des Gehäuses 100 angeordnet sein. Die Entfeuchtungseinrichtung 300 kann in das Gehäuse 100 beispielsweise eingesetzt, eingeklemmt, eingeschraubt oder eingeklebt sein. Alternativ kann ein Bereich des Gehäuses 100 als Körper 310 ausgebildet sein.

Der Körper 310 ist als elektrischer Isolator ausgebildet. Der Körper 310 kann beispielsweise ein mineralisches Material wie Quarz, Glas oder Quarzglas oder einen Kunststoff wie Polytetrafluorethylen (PTFE, Polytetrafluorethen, Teflon) umfassen. Der Körper 310 (Kapilarkörper, Kapilarscheibe) umfasst eine Vielzahl von Kapilarröhrchen (Kapilaren) 320₁-320₇, die sich von einer ersten Seite (Oberseite) bis zu einer zweiten Seite (Unterseite) des Kapilarkörpers 310 erstrecken, wobei die Oberseite dem Innenraum des Gehäuses 100 zu gewandt ist, und die Unterseite der Umgebung zu gewandt ist. Die Vielzahl von Kapilarröhrchen 320₁-320₇ kann beispielsweise von 10 bis 1000000 wie von 100 bis 100000, vorzugsweise 1000 bis 10000 Kapilarröhrchen umfassen. Die Kapilarröhrchen 320₁-320₇ können im Wesentlichen voneinander beabstandet und gleichmäßig auf der Kapilarscheibe 310 angeordnet sein. Die Kapilarröhrchen 320₁-320₇ können im Wesentlichen senkrecht zur Oberseite bzw. Unterseite verlaufen. Die Kapilarröhrchen 320₁-320₇ weisen jeweils eine Länge von 1 mm bis 20 mm beispielsweise von 5 mm bis 10 mm auf. Die Kapilarröhrchen 320₁-320₇ weisen jeweils einen Durchmesser (Innendurchmesser) von 20 µm bis 500 µm beispielsweise von 50 µm bis 200 µm, vorzugsweise 100 µm auf.

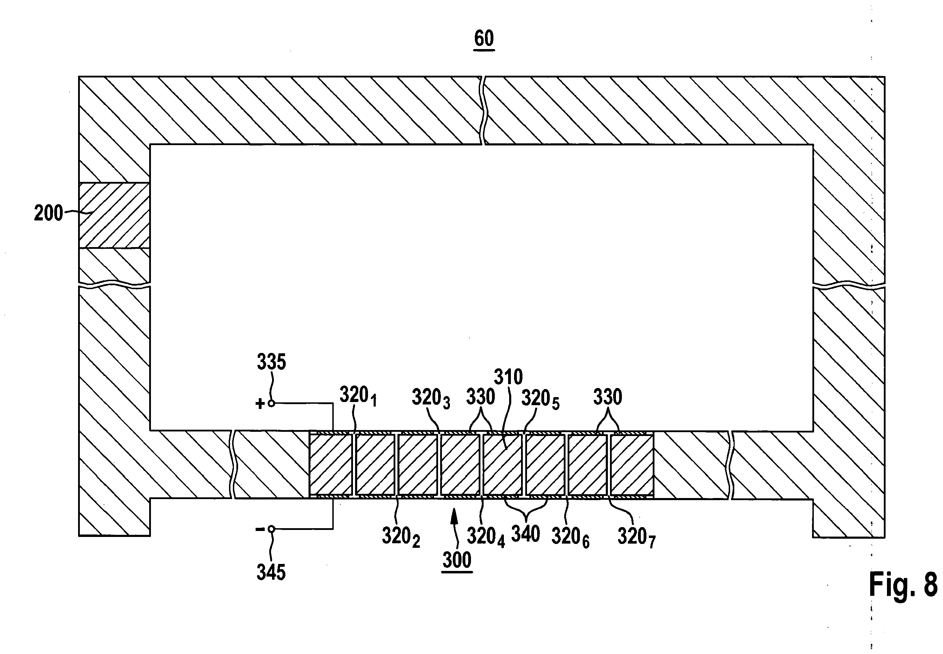

Auf der Oberseite der Kapilarscheibe 310 ist eine erste Elektrode (positive Elektrode, Anode) 330 mit einem ersten Anschluss (positiven Anschluss) 335 angeordnet. Auf der Unterseite der Kapilarscheibe 310 ist eine zweite Elektrode (negative Elektrode, Kathode) 340 mit einem zweiten Anschluss (negativen Anschluss) 345 angeordnet. Die Elektroden 330, 340 umfassen ein elektrisch leitendes Material beispielsweise ein Metall wie Gold, Silber oder Kupfer oder eine Metalllegierung. Die Elektroden 330, 340 können beispielsweise abgeschieden wie aufgedampft werden. In Bereichen an den Enden (Kapilaröffnungen) der Kapilarröhrchen 320₁-320₇ weisen die Elektroden jeweils Öffnungen auf. Die Öffnungen der Elektroden 330, 340 können einen Durchmesser, der größer ist als der Innendurchmesser Kapilarröhrchen 320₁-320₇, aufweisen, sodass die Elektroden 330, 340 nicht bis an die Kapilaröffnungen heranreichen. Die Elektroden 330, 340 können, wie in Figuren 1-7 gezeigt, vertieft in dem Kapilarkörper 310 angeordnet sein. Alternativ können die Elektroden 330, 340, wie in Figur 8 gezeigt, auf dem Kapilarkörper 310 angeordnet sein.

Die Steuerungseinrichtung 350 ist mit den Anschlüssen 335, 345 der Entfeuchtungseinrichtung 300 verbunden, um die Entfeuchtungseinrichtung 300 über ein Steuersignal zu steuern. Das Steuersignal ist eine Gleichspannung im Bereich von 1 kV bis 50 kV beispielsweise von 2 kV bis 20 kV wie 3 kV (Hochspannung). Das Steuersignal kann einen Strom von 100 µA bis 500 µA beispielsweise 200 µA bis 300 µA wie 250 µA und einen elektro-osmotischen Fluss, der das Wasser aufgrund eines elektrischen Felds von der Oberseite der Kapilarscheibe 310 auf die Unterseite der Kapilarscheibe 310 transportiert, bewirken. Dabei wird das Wasser als neutrale Flüssigkeit nicht elektrolysiert.

Die Steuerungseinrichtung 350 kann das Steuersignal aus einer Spannung, die beispielsweise von den Batteriezellen bereitgestellt wird, durch Wandlung (Transformation) erzeugen. Die Steuerungseinrichtung 350 kann das Steuersignal beispielsweise in regelmäßigen Zeitabständen wie 20 min ein und 120 min aus oder zu bestimmten Zeitpunkten beispielsweise bei einem Stromüberschuss aufgrund von Rekuperation beim Bremsen oder nur, wenn das Fahrzeug bewegt wird, aktivieren.

Dabei kann das Steuersignal einen vorbestimmten Grad an Restwelligkeit umfassen, sodass die Steuerungseinrichtung 350 mittels einer geringen Anzahl von Bauelementen kostengünstig realisiert werden kann.

Die Vorrichtung zur Entfeuchtung des Gehäuses 100 kann weiterhin eine Sensoreinrichtung wie Feuchtigkeitssensoreinrichtung und / oder Temperatursensoreinrichtung, die mit der Steuerungseinrichtung 350 verbunden ist, zur Erfassung von Messwerten wie Feuchtigkeitsmesswerten oder Druckmesswerten im Innenraum umfassen.

Die Steuerungseinrichtung 350 kann als analoge Verarbeitungseinrichtung oder digitale Verarbeitungseinrichtung ausgebildet sein. Die Steuerungseinrichtung 350 kann einen Prozessor, einen Speicher und eine Schnittstelle umfassen. Die Steuerungseinrichtung 350 kann als Mikrokontroller, Rechengerät (Computer) oder Steuergerät (Control Unit) wie Batteriesteuergerät (Battery Control Unit, BCU) ausgebildet sein. Der Prozessor kann als Mikroprozessor ausgebildet sein. Der Speicher kann als flüchtiger und / oder nichtflüchtiger Speicher ausgebildet sein. Der Speicher dient zum Speichern von Instruktionen (Befehlen), zum Beispiel Instruktionen von einem Betriebssystem und / oder einem Anwendungsprogramm, und / oder Daten, zum Beispiel Messwerten, Parametern, Bereichswerten, Vergleichswerten und Tabellen. Die Schnittstelle dient, zum Beispiel, zur Übertragung von Signalen von der Sensoreinrichtung an die Steuerungseinrichtung 350 und von der Steuerungseinrichtung 350 an die Entfeuchtungeinrichtung 300 und / oder einer (übergeordneten) Steuerungseinrichtung.

Der Prozessor verarbeitet die Daten anhand der gespeicherten Instruktionen, sodass das Verfahren zur Entfeuchtung des Gehäuses 100 implementiert wird. Die Steuerungseinrichtung 350 kann, wie in Figur 1 gezeigt, in dem Gehäuse 100 angeordnet sein. Alternativ kann die Steuerungseinrichtung 350 außerhalb des Gehäuses 100 angeordnet sein.

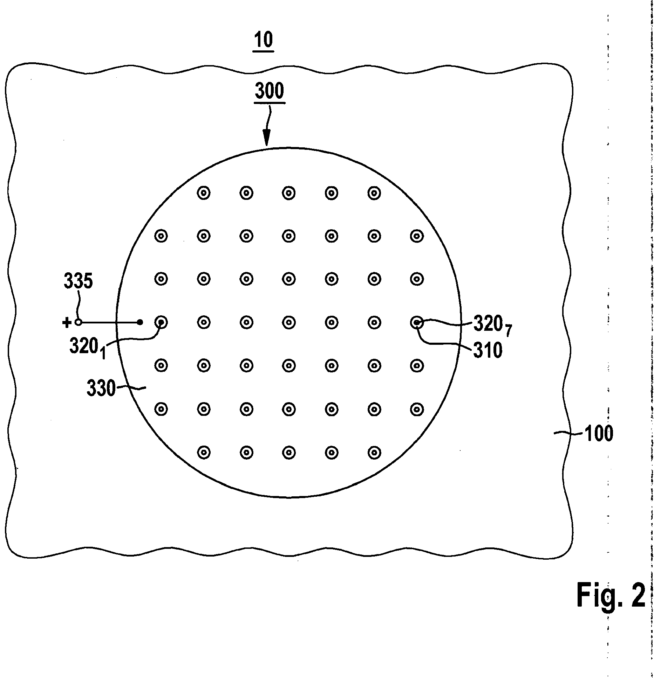

Figur 2 zeigt, mit Bezug auf Figur 1, eine schematische Draufsicht des Batteriesystems 10 mit der Vorrichtung 300 gemäß der Ausführungsform der Erfindung.

Die Entfeuchtungseinrichtung 300 ist in dem Gehäuseboden angeordnet. Der Kapilarkörper 310 ist als Rundscheibe ausgebildet. Die Kapilarröhrchen, zum Beispiel 320₁-320₇, sind im Wesentlichen voneinander beabstandet und gleichmäßig auf der Kapilarscheibe 310 angeordnet. Die Anode 330 auf der Oberseite der Kapilarscheibe 310 reicht nicht bis an die Kapilaröffnungen heran.

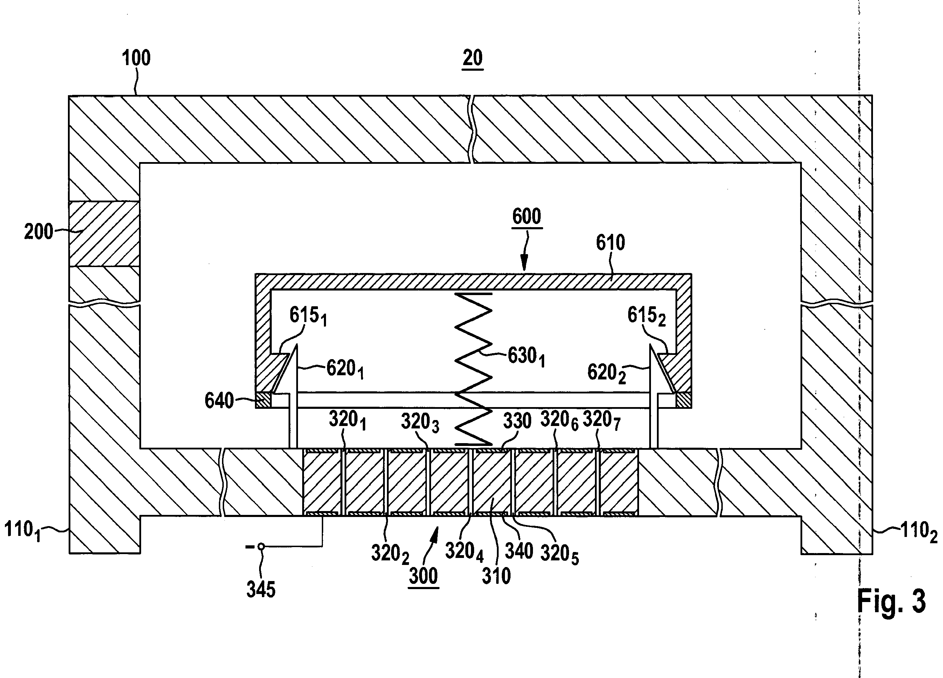

Figur 3 zeigt eine schematische Seitenansicht eines Batteriesystems 20 mit einer anderen Vorrichtung 300 gemäß der Ausführungsform der Erfindung in einer geöffneten Stellung.

Wenn das Batteriesystem 20 ein Entgasungssystem umfasst, soll ein bei der Entgasung von einer oder mehreren Batteriezellen austretende Schadgas durch das Entgasungssystem kontrolliert an die Umgebung abgegeben werden.

Die Vorrichtung zur Entfeuchtung des Gehäuses 100 umfasst weiterhin eine Verschliesseinrichtung 600 zum Verschließen der Entfeuchtungseinrichtung 300 bei Austritt von Schadgas. Dadurch kann ein unkontrollierter Austritt des Schadgases in die Umwelt oder einen Fahrgastraum eines Fahrzeugs verhindert werden.

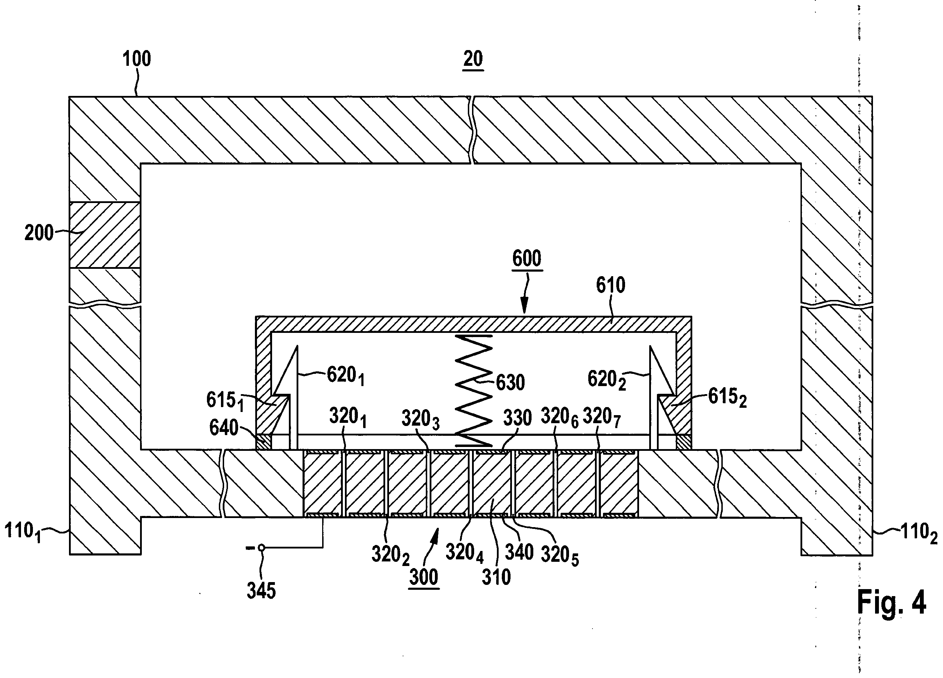

Die Verschliesseinrichtung 600 kann einen Abdeckung 610 beispielsweise einen Deckel zum Verschließen des Kapilarkörpers 310 umfassen. Die Abdeckung 610 kann, wie bereits mit Bezug auf den Kapilarkörper 310 beschrieben, beispielsweise rund, rechteckige oder quadratisch ausgebildet sein. Die Abdeckung 610 kann eine.Rasteinrichtung 615₁, 615₂ wie Rastnasen oder einen Rastring umfassen. Die Verschliesseinrichtung 600 kann Rastfedern 620₁, 620₂, die beispielsweise auf der Oberseite der Entfeuchtungseinrichtung 300 oder dem Boden des Gehäuses 100 angeordnet sein können, zum Einrasten in der Rasteinrichtung 615₁, 615₂ und Verriegeln der Abdeckung 610 umfassen. Die Rasteinrichtung 615₁, 615₂ und die Rastfedern 620₁, 620₂, können, wie in Figuren 3 und 4 gezeigt, innerhalb der Abdeckung 610 angeordnet sein. Dadurch können sie vor mechanischen Beschädigungen geschützt werden. Alternativ können sie außerhalb der Abdeckung 610 angeordnet sein. Dadurch kann die Größe der Abdeckung 610 reduziert werden. Die Verschliesseinrichtung 600 kann weiterhin eine Rückstelleinrichtung (Feder) 630 zum Beabstanden der Abdeckung von der Entfeuchtungseinrichtung 300 in der geöffneten Stellung umfassen, so dass das Gehäuse 100 mittels der Vorrichtung 300, 350 entfeuchtet werden kann.

Die Verschließeinrichtung 600 kann weiterhin ein Dichtung 640 beispielsweise einen Dichtring, der an der Abdeckung 610 ausgebildet ist, umfassen. Die Dichtung 640 kann beispielsweise angespritzt, angeklebt, anvulkanisiert oder angeklemmt sein.

Eine Entgasung erzeugt einen Druckstoß, der die Abdeckung 610 gegen die Kraft der Rückstelleinrichtung 630 in Richtung der Entfeuchtungseinrichtung 300 drückt, sodass die Rastfedern 620₁, 620₂ in der Rasteinrichtung 615₁, 615₂ einrasten und somit die Abdeckung 610 verriegeln können. Dadurch kann das austretende Schadgas durch das Entgasungssystem kontrolliert an die Umgebung abgegeben werden.

Figur 4 zeigt eine schematische Seitenansicht des Batteriesystems 20 mit der anderen Vorrichtung 300 gemäß der Ausführungsform der Erfindung in einer geschlossenen Stellung.

Nach der Entgasung bleiben die Rastfedern 620₁, 620₂ in der Rasteinrichtung 615₁, 615₂ eingerastet, und die Abdeckung 610 bleibt verriegelt.

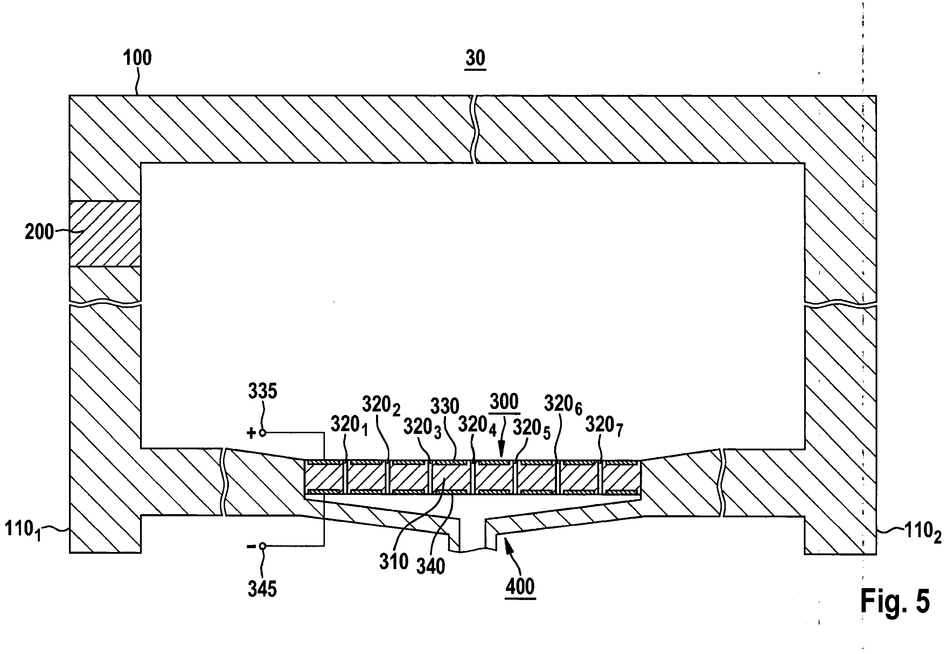

Figur 5 zeigt eine schematische Seitenansicht eines Batteriesystems 30 mit einer Vorrichtung 300 gemäß einer anderen Ausführungsform der Erfindung.

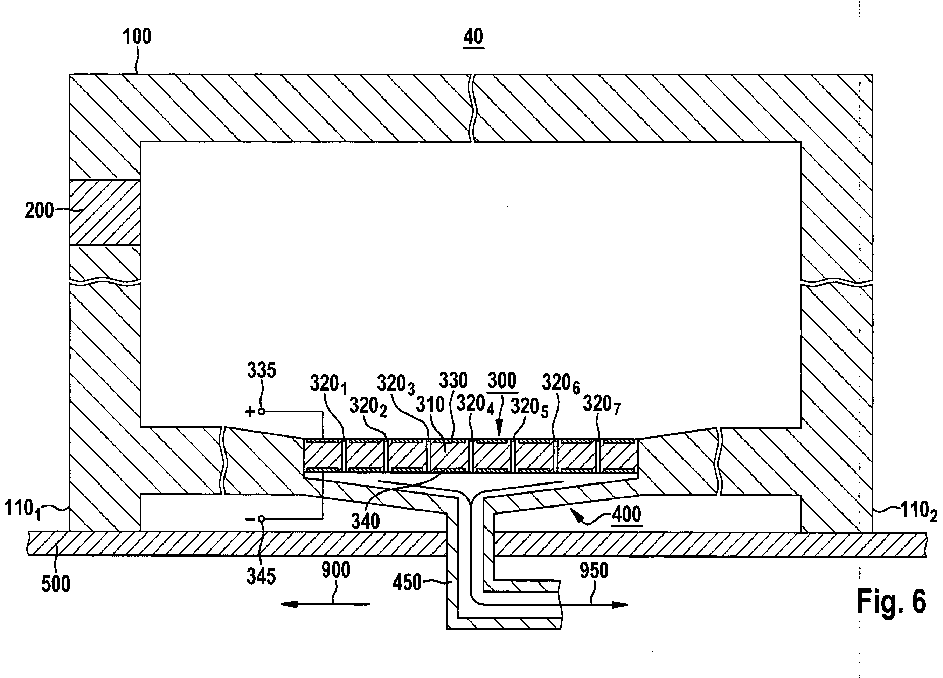

Die Entfeuchtungseinrichtung 300 kann, wie auch in Figur 6 gezeigt, in einer Vertiefung des Gehäusebodens angeordnet sein. Dadurch kann sich das Wasser auf der Oberseite der Entfeuchtungseinrichtung 300 sammeln. Dabei kann die Oberseite der Entfeuchtungseinrichtung 300 etwas tiefer liegen als eine Oberseite des Gehäusebodens. Die Vertiefung kann in der Mitte des Gehäusebodens bzw. einer Grundfläche des Gehäuses 100 ausgebildet sein. Dadurch kann eine mittlere Wegstrecke des Wassers bis zur Entfeuchtungseinrichtung 300 reduziert werden. Die Oberseite des Gehäusebodens kann ganz oder teilweise in Richtung der Entfeuchtungseinrichtung 300 abgeschrägt sein. Die Oberseite des Gehäusebodens kann Känale oder Rinnen umfassen.

Die Vorrichtung zur Entfeuchtung des Gehäuses 100 kann weiterhin eine Abflusseinrichtung 400 für das aus der Batterie entfernte Wasser umfassen. Die Abflusseinrichtung 400 kann beispielsweise, wie in Figuren 5 und 6 gezeigt, als Bereich des Gehäusebodens ausgebildet sein.

Figur 6 zeigt eine schematische Seitenansicht eines in einem Fahrzeug angeordneten Batteriesystems 40 mit der Vorrichtung 300 gemäß der anderen Ausführungsform der Erfindung.

Das Batteriesystem 40 ist auf einem Boden des Fahrzeugs (Fahrzeugboden) 500 angeordnet. Die Abflusseinrichtung 400 ragt durch eine Öffnung in dem Fahrzeugboden hindurch auf eine Unterseite des Fahrzeugs in Richtung Straße (nicht gezeigt). Die Abflusseinrichtung 400 umfasst ein Kniestück 450 (Unterdruckabflusseinrichtung).

Wenn sich das Fahrzeug in Richtung des Pfeils 900 bewegt, wird das aus der Batterie entfernte Wasser als Feuchte-Luft-Aerosol mittels einer Sogwirkung in Richtung des Pfeils 950 aus der Ablusseinrichtung 400, 450 entfernt. Somit ist für die Unterdruck- - absaugung kein Antrieb erforderlich. Alternativ kann Die Vorrichtung zur Entfeuchtung des Gehäuses 100 weiterhin eine Unterdruckpumpe umfassen. Die Unterdruckpumpe kann mit der Steuerungseinrichtung 350 verbunden sein, um von der Steuerungseinrichtung gesteuert werden zu können.

Im Gegensatz zur dem bei einer Entgasung erzeugten Druckstoß reicht die Sogwirkung nicht aus, um die Rastfedern 620₁, 620₂ in der Rasteinrichtung 615₁, 615₂ einzurasten und somit die Abdeckung 610 zu verriegeln.

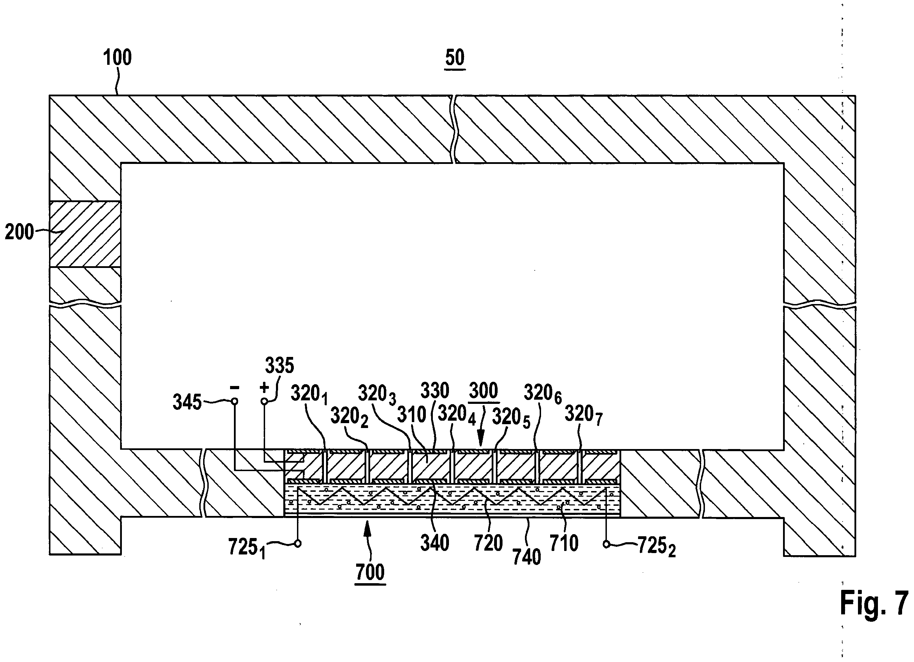

Figur 7 zeigt eine schematische Seitenansicht eines Batteriesystems 50 mit einer anderen Vorrichtung 300 gemäß der anderen Ausführungsform der Erfindung.

Die Vorrichtung zur Entfeuchtung des Gehäuses 100 kann weiterhin eine Trockenmitteleinrichtung 710, 740 zur Aufnahme und / Speicherung wie Zwischenspeicherung des aus der Batterie entfernten Wassers umfassen. Die Trockenmitteleinrichtung 710, 740 kann auf der Unterseite der Entfeuchtungseinrichtung 300 angeordnet sein. Die Trockenmitteleinrichtung 710, 740 umfasst ein Trockenmittel 710 beispielsweise eine Siliktatgel oder Kieselgel. Die Trockenmitteleinrichtung 710, 740 kann beispielsweise als Trockenmittelbehälter mit Deckel 740 ausgebildet sein. Alternativ kann die Trockenmitteleinrichtung 710, 740 als Trockenmittelpatrone ausgebildet sein. Der Trockenmittelbehälter und / oder Deckel 740 oder die Trockenmittelpatrone können mit dem Gehäuseboden lösbar verbunden beispielsweise verschraubt sein. Sie können ggf. verklebt sein.

Das Trockenmittel 710 kann als regenerierbares Trockenmittel ausgebildet sein. Das Trockenmittel beispielsweise Kieselgel kann mit einem Wasserindikator beispielsweise organgefarbenen Wasserindikator behandelt sein, sodass sich das Trockenmittel in Abhängigkeit von der gebundenen Menge an Wasser verfärbt. Die Verfärbung ist reversibel, sodass das Trockenmittel nach dem Trocknen, das durch Zufuhr von Wärme erreicht werden kann, wieder hell (weiß) wird.

Somit kann das Trockenmittel von dem Gehäuse 100 entfernt, getrocknet und wieder eingesetzt werden, wenn das Trockenmittel gesättigt ist bzw. sich der Wasserindikator verfärbt hat.

Alternativ kann die Trockenmitteleinrichtung eine Heizeinrichtung beispielsweise einen elektrischen Widerstand 720 wie Widerstandsdraht mit elektrischen Anschlüssen 725₁, 725₂ umfassen. Somit kann das Trockenmittel in der Trockenmitteleinrichtung durch Anlegen einer elektrischen Spannung, d. h. Gleichspannung oder Wechselspannung, an die Anschlüssen 725₁, 725₂ an Ort und Stelle getrocknet werden, wenn das Trockenmittel gesättigt ist. Der elektrische Widerstand 720 kann mit der Steuerungseinrichtung 350 verbunden sein, um von der Steuerungseinrichtung 350 gesteuert werden zu können.

Die Trockenmitteleinrichtung kann weiterhin eine Sensoreinrichtung, beispielsweise eine Feuchtigkeitssensoreinrichtung zum Erfassen der Feuchtigkeit oder eine optische Sensoreinrichtung zum Erfassen der Verfärbung umfassen. Die Sensoreinrichtung kann mit der Steuerungseinrichtung 350 verbunden sein.

Figur 8 zeigt eine schematische Seitenansicht eines Batteriesystems 60 mit einer Vorrichtung 300 gemäß einer weiteren Ausführungsform der Erfindung.

Die Vorrichtung zur Entfeuchtung des Gehäuses 100 umfasst eine Entfeuchtungseinrichtung 300 bei der die Elektroden 330, 340 auf dem Kapilarkörper 310 angeordnet sein.

Die Merkmale der Vorrichtungen 300, zum Beispiel der in Figuren 3 und 5 oder Figuren 3 und 7 gezeigten Vorrichtungen 300, können kombiniert werden.

## Patentansprüche

1. Batteriegehäuse (100), umfassend
eine Vorrichtung zur Entfernung von Wasser aus dem Batteriegehäuse (100) umfassend:
- einen Körper (310) mit einer Vielzahl von Kapilaren (320₁-320₇) und Elektroden (330, 340) zum Erzeugen eines elektrischen Felds, und
- eine Steuerungseinrichtung (350) zur Steuerung des elektrischen Felds zum Entfernen des Wassers durch die Kapilare (320₁-320₇) und
- ein Entgasungssystem ausgebildet zu einer Abgabe von Schadgas an eine Umgebung
**gekennzeichnet, durch**
- eine Verschliesseinrichtung (600) zum Verschließen des Körpers (310), wobei die Verschließeinrichtung (600) eine Abdeckung (610) mit einer Rasteinrichtung (615₁, 615₂) und Rastfedern (620₁, 620₂) zum Einrasten in der Rasteinrichtung (615₁, 615₂) und Verriegeln der Abdeckung (610) umfasst.

2. Das Batteriegehäuse nach Anspruch 1, wobei die Vorrichtung weiterhin:
- eine Abflusseinrichtung (400) oder Unterdruckabflusseinrichtung (400, 450) zum Abführen des entfernten Wassers
umfasst.

3. Das Batteriegehäuse nach einem der Ansprüche 1 bis 2, wobei die Vorrichtung weiterhin:
- eine Trockenmitteleinrichtung (710, 740) oder beheizbare Trockenmitteleinrichtung (710, 720, 725₁, 725₂, 740) zur Aufnahme des entfernten Wassers umfasst.

4. Batteriesystem (10; 20; 30; 40; 50; 60), umfassend:
- das Batteriegehäuse (100) nach einem der Ansprüche 1 bis 4 sowie
- Batteriezellen.

5. Fahrzeug, Kraftfahrzeug, Elektrokraftfahrzeug oder Hybridfahrzeug, umfassend:
- das Batteriegehäuse (100) nach einem der Ansprüche 1 bis 4 verbunden mit dem Fahrzeug oder
- das Batteriesystem (10; 20; 30; 40; 50; 60) nach Anspruch 5 verbunden mit dem Fahrzeug.

6. Verfahren zur Entfernung von Wasser aus einem Batteriegehäuse (100) ausgebildet nach einem der Ansprüche 1 bis 3, **gekennzeichnet durch**:
Steuern des elektrischen Felds zum Entfernen des Wassers durch die Kapilare (320₁-320₇) mittels einer Steuerungseinrichtung (350).

## Claims

1. Battery housing (100), comprising
an apparatus for removing water from the battery housing (100) comprising:
- a body (310) with a large number of capillaries (320₁-320₇) and electrodes (330, 340) for generating an electric field, and
- a control device (350) for controlling the electric field for removing the water through the capillaries (320₁-320₇) and
- a degassing system designed for outputting harmful gas to a surrounding area,
**characterized by**
- a closing device (600) for closing the body (310), wherein the closing device (600) comprises a cover (610) with a latching device (615₁, 615₂) and latching springs (620₁, 620₂) for latching into the latching device (615₁, 615₂) and locking the cover (610).

2. Battery housing according to Claim 1, wherein the apparatus further comprises:
- an outflow device (400) or vacuum outflow device (400, 450) for discharging the removed water.

3. Battery housing according to either of Claims 1 and 2, wherein the device further comprises:
- a desiccant device (710, 740) or heatable desiccant device (710, 720, 725₁, 725₂, 740) for absorbing the removed water.

4. Battery system (10; 20; 30; 40; 50; 60;) comprising:
- the battery housing (100) according to one of Claims 1 to 4 and also
- battery cells.

5. Vehicle, motor vehicle, electric motor vehicle or hybrid vehicle comprising:
- the battery housing (100) according to one of Claims 1 to 4, connected to the vehicle, or
- the battery system (10; 20; 30; 40; 50; 60) according to Claim 5, connected to the vehicle.

6. Method for removing water from a battery housing (100) designed according to one of Claims 1 to 3, **characterized by**:
- controlling the electric field for removing the water through the capillaries (320₁-320₇) by means of a control device (350).

## Revendications

1. Boîtier de batterie (100), comprenant
un dispositif pour éliminer de l'eau du boîtier de batterie (100), comprenant :
- un corps (310) avec une pluralité de capillaires (320₁ à 320₇) et d'électrodes (330, 340) pour produire un champ électrique, et
- un dispositif de commande (350) pour commander le champ électrique pour éliminer l'eau à travers les capillaires (320₁ à 320₇), et
- un système de dégazage, réalisé pour dégager un gaz toxique dans un environnement,
**caractérisé par**
- un dispositif d'obturation (600) pour obturer le corps (310), le dispositif d'obturation (600) comprenant un couvercle (610) avec un dispositif d'enclenchement (615₁, 615₂) et des ressorts d'enclenchement (620₁, 620₂) pour s'enclencher dans le dispositif d'enclenchement (615₁, 615₂) et pour verrouiller le couvercle (610).

2. Boîtier de batterie selon la revendication 1, dans lequel le dispositif comprend en outre :
- un dispositif d'écoulement (400) ou un dispositif d'écoulement à dépression (400, 450) pour évacuer l'eau éliminée.

3. Boîtier de batterie selon l'une quelconque des revendications 1 et 2, dans lequel le dispositif comprend en outre :
- un dispositif à dessiccateur (710, 740) ou un dispositif à dessiccateur pouvant être chauffé (710, 720, 725₁, 725₂, 740) pour absorber l'eau éliminée.

4. Système de batterie (10 ; 20 ; 30 ; 40 ; 50 ; 60), comprenant :
- le boîtier de batterie (100) selon l'une quelconque des revendications 1 à 4, ainsi que
- des cellules de batterie.

5. Véhicule, véhicule automobile, véhicule automobile électrique ou véhicule hybride, comprenant :
- le boîtier de batterie (100) selon l'une quelconque des revendications 1 à 4, qui est connecté au véhicule, ou
- le système de batterie (10 ; 20 ; 30 ; 40 ; 50 ; 60) selon la revendication 5 qui est connecté au véhicule.

6. Procédé permettant d'éliminer de l'eau d'un boîtier de batterie (100) réalisé selon l'une quelconque des revendications 1 à 3, **caractérisé par** l'étape consistant à :
- commander le champ électrique pour éliminer l'eau à travers les capillaires (320₁ à 320₇) au moyen d'un dispositif de commande (350).
